# EUROPEAN PATENT APPLICATION

(11) **EP 0 545 418 A1**
(43) Date of publication of application: **09.06.1993**
(21) Application number: 92120672.8
(22) Date of filing: 03.12.1992
(51) Int. Cl.: F16B 2/00, F16B 5/02, F16D 1/06

(54) **Procedure for the joining of bodies and a corresponding joint**

(30) Priority: 03.12.1991 FI 915704
(71) Applicant: KONE OY, SF-00330 Helsinki 33 (FI)
(72) Inventor: Jussila, Olavi, SF-05830 Hyvinkää (FI)
(74) Representative: Zipse + Habersack

(57) **Abstract**

The invention relates to a procedure increasing the shear strength of a joint against forces acting in the direction of the joint surface, and to a corresponding joint. According to the invention, a shear element (7) having a strength exceeding that of the bodies (2,3) to be joined is placed between the bodies (2,3). The bodies (2,3) are then pressed together so that the shear element (7) sinks into the bodies (2,3), deforming the material and forming a closed space. The bodies (2,3) are fixed to each other by means of fixing elements (4,6).

## Description

The present invention relates to a procedure for joining bodies together as defined in the introductory part of claim 1, and a joint as defined in the introductory part of claim 7.

In joints between bodies whose opposite surfaces are pressed together by means of fixing elements, e.g. bolts, the function of the fixture is often to keep the bodies tightly together and to prevent them from sliding relative to each other. The shear strength depends on the shear strength of the fixing elements or the friction coefficient between the bodies to be joined, together with the compressive force acting on the bodies. The friction coefficient between the surfaces can be improved on the one hand by removing all impurities from the surfaces and on the other hand by machining them so as to make them as straight as possible. However, for example the friction coefficient of steel remains at a value of about 0.15 - 0.3. For surfaces well cleaned, the maximum value may apply. In friction joints, the shear strength and compressive force caused by the fixing elements, e.g. bolts, can be increased up to a certain limit by increasing their number. Both improving the quality of the surfaces and increasing the number of fixing elements result in higher costs.

A previously known joining method is presented in patent publication GB 1 200 816 (Int. Cl. F 16 b 29/00), in which one of the bodies to be joined is provided with a conical boring in which a plug of corresponding shape is fitted. One end of the plug is provided with elements that cut into the other body. This joining method requires extra work and accurate fitting of the parts. A gap remains between the bodies to be joined and they are not pressed together, so the friction between the bodies is not utilized at all. In another previously known joining method, the shear strength of a friction joint is increased by providing the bodies with a hole in which a special shear ring or shear piece is attached by welding. Another known device is to use adapting screws, in which case the holes made for them must be exactly aligned.

The object of the present invention is to achieve a new procedure for joining bodies together and a corresponding joint, allowing the formation of a reliable joint with a high shear strength in an advantageous manner involving no complex operations or extra accessories. To accomplish this, the procedure of the invention is characterized by the features presented in the characterizing part of claim 1. The joint of the invention is characterized by the features presented in the characterizing part of claim 7.

In the joining method of the invention, the only parts needed in addition to the normal fixing elements are the shear elements, which have an insignificant effect on the cost. The bodies to be joined together by the method of the invention need not be machined in advance for the joining. It suffices to make the necessary holes with suitable clearances for the fixing bolts. Accurate positioning and fitting can be done in connection with the actual joining operation. The joint will retain its shear strength even if the initial tension of the fixing bolts is somewhat reduced.

The number of fixing bolts can be reduced to half that of a corresponding joint based on friction. For example, in the case of steel bodies, the joint can reach shear strength values corresponding to a friction coefficient of 0.6. The surfaces to be joined can be given a finishing, e.g. by painting, without causing an essential reduction in the shear strength of the joint. Besides, the surfaces need no careful cleaning. In cases where the direction of the force acting on the joint is known, the shear elements can be so formed and mounted that they will resist this force.

In the following, the invention is described by the aid of some of its embodiments by referring to the drawings, in which
- Fig. 1a presents a cross-section of the joint of the invention,
- Fig. 1b presents a shear element,
- Fig. 2a presents a magnified cross-sectional view of the shear element and the deformation produced in the joined bodies,
- Fig. 2b presents a magnified view of the deformation produced in the joined bodies when the compressive force is insufficient, and
- Fig. 3 presents another joint implemented according to the invention.

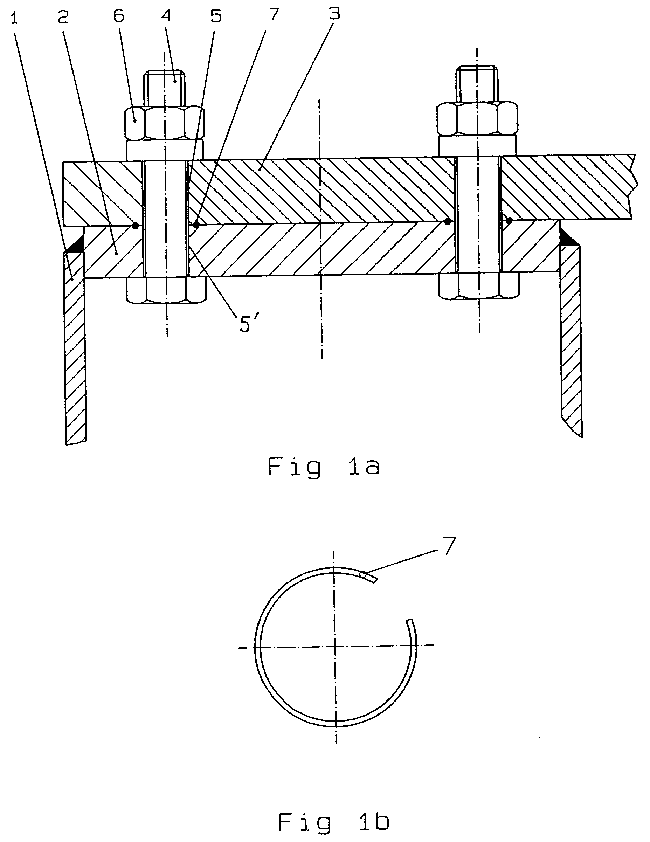

Fig. 1a represents the joint between the head and head supporter of a crane, implemented as provided by the invention. The crane head structure consists of plates 1 and 2 welded together. This structure has been manufactured at the factory. To allow the crane head supporter 3 to be attached to the head structure, each has been provided with bores 5 and 5', respectively.

When the head structure and the head supporter are to be attached to each other, shear elements 7 having the form of a closed or open ring and made of a material substantially harder than the material of the head plate 2 and head supporter plate 3 are placed between these plates around the bolts 4 going through the holes 5 and 5'. Fig. 1b shows a magnified view of a shear element 7 having the form of an open ring, as used in the structure of Fig. 1a. The steel normally used in the crane head and crane head supporter has an ultimate strength of about 320 - 640 N/mm² and a Vicker's hardness of about 100 - 200. The steel ring 7 used as a shear element has an ultimate strength of about 1800 - 2200 N/mm² and a Vicker's hardness of about 550 - 650. In this case, shear elements of a material thickness of 0.8 mm are used.

The steel ring 7 has a diameter slightly larger than that of the holes 5 and 5'. Similarly, the bolt 4 has a diameter slightly smaller than that of the holes 5 and 5'. For example, when bolts of ⌀ 16 mm are used, the diameter of the holes is 18 mm and that of the steel ring about 22 mm. This provides a sufficient play between the plates 2 and 3 to allow proper alignment, and a sufficient material thickness is provided between the steel ring 7 and the holes 5 and 5'.

For installation, the plates 2 and 3 are aligned and the steel rings 7 are placed around the holes 5. The bolts 4 are fitted in the holes 5 and tightened with nuts 6 to a tightness that causes the steel rings 7 to sink into bodies 2 and 3. When parts with the above-mentioned dimensions are used, a sufficient tightening force will be about 300 Nm. If both of the bodies to be joined are made of a material having essentially the same characteristics, the shear element will sink into both bodies by an equal amount. Thus, a closed space of a form corresponding to the cross-sectional form of the shear element is produced at the location of the element.

It is also possible to use a separate pressure apparatus, e.g. a hydraulic press (not shown), to press together the bodies 2 and 3 to be joined, using a sufficient force to enable the shear elements to sink into the bodies. In this case, fixing bolts are only used to hold the bodies together, so it is possible to use smaller screws.

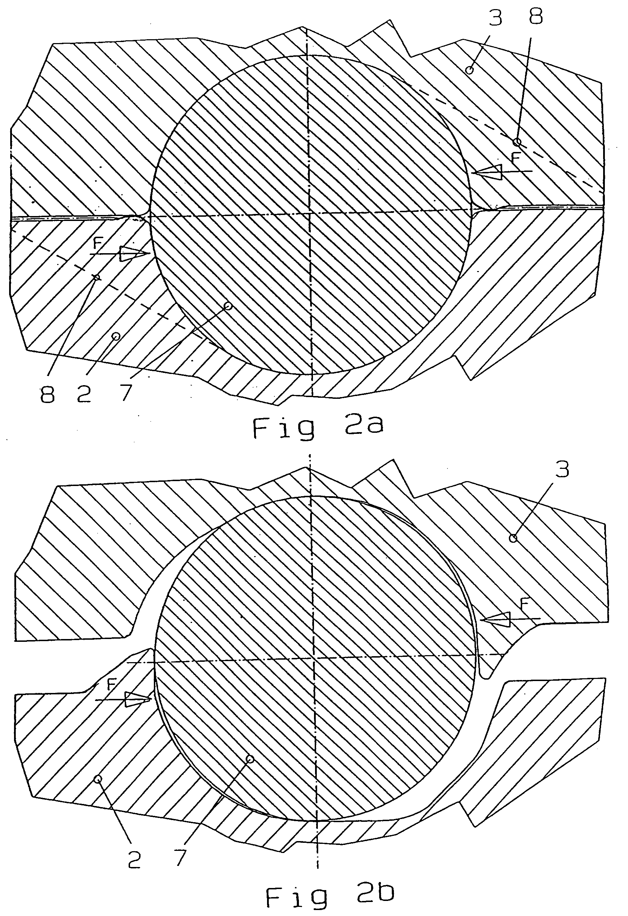

When a force acting in the direction of the joint surface is applied to the joint, the force will be transmitted between the plates 2 and 3 through the shear element 7. Fig. 2 illustrates the forces applied to the bodies thus joined by showing the resulting deformations of the bodies. Fig. 2a presents one of the bodies joined, in a magnified view taken at the region of the shear element 7, when the surfaces of the bodies are completely pressed together by screw force. The shear element has sunk into both bodies into equal depths, producing at the joint a closed space of a form substantially corresponding to the cross-sectional form of the shear element. As the two bodies are pressed together by the screw force, the force applied to the joint surface is distributed in the bodies joined and the shape of the closed space remains essentially unchanged.

Fig. 2b illustrates a situation where the shear elements have not sunk completely into the bodies. In this case, a small gap remains between the bodies. When a force F acting in the direction of the joint surface has been applied to the joint, the body edge behind the shear element, as seen in the direction of the force, has yielded. Being of a strength inferior to the shear element, the body has undergone a deformation resulting from the force F, and some of the surface material of the body has moved into the gap between the bodies. In the case of Fig. 2a, this is not possible because the shear element is in the closed space formed between the bodies and the edge of the softer material cannot rise. The shear effect advances along the separating surface 8 represented by the broken line. In the case of an element like the one shown in the figure, the softer material, i.e. the material of bodies 2 and 3, flows well and no fissures are produced that might later result in fatigue failures.

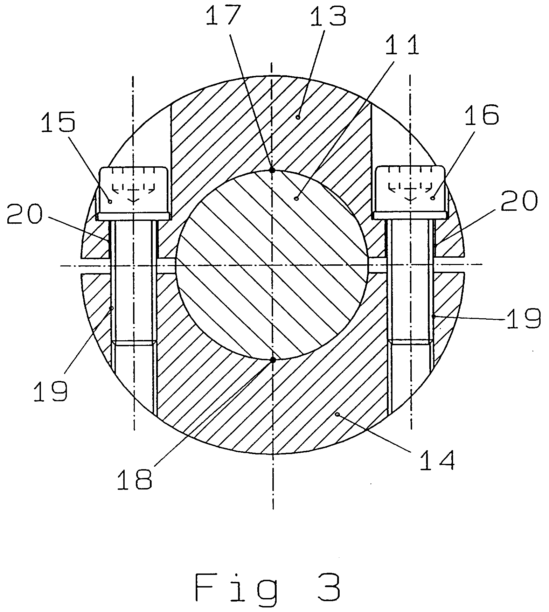

Fig. 3 presents another embodiment of the invention as applied to a split coupling. To transmit a torque between a shaft 11 and a second shaft (not shown), the split sections 13 and 14 of the coupling, which are fixed to the second shaft, are tightened around shaft 11 by means of bolts 15 and 16 going through holes 19 and 20 provided in the split sections. A shear element 17 is placed between shaft 11 and split section 13. In this case, the shear element is a steel wire placed axially at equal distances from the bolts. Similarly, a shear element 18, substantially identical with shear element 17, is placed between shaft 11 and split section 14. The split sections 13 and 14 are pressed together around the shaft 11 by means of the bolts 15 and 16 so that the shear elements 17 and 18 sink into the shaft 11 and split sections 13 and 14, forming a closed space for themselves. Thus, the shear elements are at right angles to the torsional force. In this case, too, it is possible to use a separate pressing tool to press the parts together.

In the embodiment of Fig. 3, the use of shear elements 17 and 18 results in a considerable increase in the allowed torque applied to the coupling as compared to a friction joint. Also, the bodies to be joined by the coupling need not be machined separately as e.g. in joints made using cotters.

In the above, the invention has been described by the aid of some of its embodiments. However, the presentation should not be regarded as limiting the invention, but the embodiments of the invention may vary within the limits defined by the claims. The shear element may also have a shape other than that of a ring, an open ring or a straight piece; it may have e.g. a curved shape or a shape that is a combination of those mentioned, depending on the direction of the force.

## Claims

1. Procedure for joining bodies (2,3;11,13,14) together by means of fixing elements (4,6;15,16), in which procedure the the opposite surfaces of the bodies (2,3;11,13,14) are pressed against each other, **characterized** in that
- at least one shear element (7;17,18) made of a material substantially harder than the bodies (2,3;11,13,14) to be joined is fitted between those surfaces of the bodies (2,3;11,13,14) which are to lie oppositely, at an advantageously small distance from the fixing elements (4,6;15,16),
- the bodies (2,3;11,13,14) are pressed together so that the shear element (7;17,18) sinks by substantially equal amounts into the bodies being (2,3;11,13,14) joined, forming an essentially closed space for itself, and
- the bodies (2,3;11,13,14) are fixed together by means of fixing elements (4,6;15,16).

2. Procedure according to claim 1, **characterized** in that the pressing together of the bodies (2,3;11,13,14) produces a permanent deformation in them at the location of the shear element (7;17,18).

3. Procedure according to claim 1 or 2, **characterized** in that the bodies (2,3;11,13,14) are pressed together and simultaneously fixed to each other by means of fixing elements (4,6;15,16).

4. Procedure according to any one of the preceding claims, **characterized** in that the bodies (2,3;11,13,14) to be joined are of a substantially equal strength and the shear element (7;17,18) has a strength at least twice as high as that of the bodies (2,3;11,13,14).

5. Procedure according to any one of the preceding claims, **characterized** in that the shear elements (7) are placed near the point of application of the pressing force.

6. Procedure according to any one of the preceding claims, **characterized** in that the bodies (2,3) are detached from each other and the shear element (7) is placed at a different position in relation to at least one of the bodies (2,3), whereupon the bodies (2,3) are again pressed together so that the shear element (7) forms a new closed space.

7. A joint for the joining of two bodies (2,3;11,13,14) which are pressed together and fixed to each other by means of fixing elements (4,6;15,16), **characterized** in that the joint comprises at least one shear element (7;17,18) which is fitted between the opposite surfaces of the bodies (2,3;11,13,14) at a distance from the fixing element (4,6;15,16), said shear element (7;17,18) being made of a material substantially harder than the material of the bodies (2,3;11,13,14) joined and having a thickness allowing the element to sink into both bodies (2,3;11,13,14) in essentially the same way, said shear element being thus placed in a closed space formed between the bodies (2,3;11,13,14).

8. Joint according to claim 7, **characterized** in that the shear element (7) is a ring or an open ring (7, Fig. 1b) and is mounted around a fixing element (4).

9. Joint according to claim 7, **characterized** in that at least one shear element (7) is located at substantially equal distances from two fixing elements (15,16).

10. Joint according to claim 7 or 8, **characterized** in that the bodies (2,3) joined are the head (2) of a crane and the head supporter (3) of a crane.

11. Joint according to claim 7 or 8, **characterized** in that the bodies (11,13,14) joined are parts of a split coupling and the shear element (17,18) serves to transmit the torque.
